# EUROPEAN PATENT APPLICATION

(11) **EP 4 660 573 A1**
(43) Date of publication of application: **10.12.2025**
(21) Application number: 24180325.3
(22) Date of filing: 05.06.2024
(51) Int. Cl.: G01B 11/00, G01B 11/26

(54) **SYNCHRONIZED POSE DETERMINATION USING LASER TRACKING AND IMU**

(71) Applicant: Leica Geosystems AG, 9435 Heerbrugg (CH)
(72) Inventor: KWIATKOWSKI, Tomasz, CH-5054 Moosleerau (CH)
(74) Representative: Kaminski Harmann

(57) **Abstract**

The invention relates to a tool pose determination system, comprising a tool, a laser tracker, a data processor, and an IMU. The tool comprises a laser-trackable target and alignment markings. The markings are distributed such that a tool orientation is derivable based on their pattern. The laser tracker provides tracking data regarding a target position with a first sampling sequence having a first sampling rate. An imaging unit of the laser tracker acquires images with a second sampling sequence having a second sampling rate which is less than the first. The IMU unit to provides IMU orientation regarding the tool orientation. The data processor derives image-based orientation based on the imaged pattern of the markings and references the IMU orientation with the image-based orientation. The data processor provide output data timestamped with a third sampling sequence having a third sampling rate which is more than the second. The output data comprises tool positions based on the tracking data and the tool orientations based on the IMU orientation and the image-based orientation.

## Description

### FIELD OF THE INVENTION

The invention relates to metrology grade, laser tracker based tool pose determination system. The tool comprises a laser-trackable target, alignment markings and associated with an inertial measurement unit (IMU). Tools in the sense of the invention represent measurement probes, manipulation or processing units configured for high precision, particularly down to micrometer level, measurement, manipulation or processing of workpieces.

### BACKGROUND OF THE INVENTION

It is well known in the metrology to use two-component measurement system, wherein a first component is static laser tracker, while the second component is a mobile, particularly handheld, measurement aid which comprises a measurement probe and means to be tracked by the laser tracker. The coordinates of object points in a workpiece can thus be derived by measuring a (relative) pose of the object point with respect to the measurement aid and by determining a pose of the measurement aid in the reference frame of the laser tracker. From here on such measurement aids will be considered as a specific class of tools in the sense of the invention. Unless otherwise provided the features of the measurement aid are correspondingly applicable to different classes of tools. From here on "absolute" orientation and position represents an orientation and position in the reference frame of the laser tracker, while "relative" orientation and position represents an orientation and position in a different reference frame, particularly that of the measurement aid/tool. "Static" and "mobile" is to be understood with respect to the actual measurement task. Particularly the laser tracker might be man-portable, mounted to an autonomous ground vehicle (AGV) or to an unmanned aerial vehicle (UAV). Said transport manners are used to reposition the laser tracker between measurement positions. The skilled person also understands that static operating conditions for a laser tracker installed on a mobile platform (such as AGV or UAV) cannot be guaranteed and may require monitoring positional stability of the laser tracker (displacement or especially vibrations).

There are tactile, non-contact or combined measuring aids. Tactile sensing measuring aids have, for example, a pen-shaped measuring probe with a ruby ball attached to one end. The ruby ball is brought into contact with a point to be measured on an object surface and the 3D coordinates of this point are determined by the measuring system on this basis. Non-contact scanning measuring aids, such as laser scanners, have a beam source for emitting measuring radiation. A point of an object surface to be measured is illuminated by the measuring radiation and measuring radiation is reflected from this illuminated point and the 3D coordinates of this point are determined based on the measured reflected radiation. The measurement aids are typically equipped with a plurality of laser-trackable targets, particularly retroreflectors and various means for orientation determination. E.g., EP 4 145 084 B1 discloses such a system.

Similar systems can be used for controlling or calibrating motorized frames, particularly robotic arms or coordinate measuring machines. Here one component, particularly close to or at the end-effector, is tracked using a specific laser-trackable target mounted on the component by a laser tracker. The pose of the tool is then determined using a combination of internal sensor data and tracking data. Alternatively, the tracking data might be used to calibrate the internal sensor, e.g. as disclosed in DE 199 47 374 A1.

For high-precision determination of 3D coordinates of scanned points on a surface, high-precision determination of the position and typically the orientation of the tool is of central importance. For that the properties of three types of sensors must be considered.

The laser tracker can determine the position, i.e. the translational coordinates, of an appropriate retroreflector target with micrometer precision. Moreover, contemporary laser trackers are capable, for typical measurement tasks, provide this precision with a refresh rate of 1000 Hz or more. However, typical laser trackers are limited to position determination, at least in terms of the required precision. The working principles of a laser tracker and an associated laser-trackable target are known from the state of the art, e.g. WO 2015/006526 A1 disclose an embodiment of the laser tracker.

Owing to limited field of view typical laser trackers are equipped with an imaging unit. If the tool comprises an associated set of alignment markings its orientation is derivable based on an imaged pattern of said markings. It is assumed that the alignment markers are distributed such that an orientation of the tool is unambiguously derivable based on the imaged pattern. This image-based orientation determination provides an absolute orientation of the tool with adequate precision. On the other hand, among other factors, the serial readout of the camera sensor pixels as well as the exposure time required for the camera sensor limit the attainable speed of the cameras. Moreover, the highest speed requires self-radiating alignment markings, typically embodied as LEDs, with high switching frequency which potentially cause to excessive heat generation, i.e. a loss of measurement precision due to thermal expansion and stress. To briefly summarize the achievable sampling rate of the imaging unit is well below that of the laser tracker itself.

IMUs are known to provide orientation and acceleration data, i.e. movement data, with a correspondingly higher sampling rate, however they are also known to provide said data with considerable noise. Moreover, the IMU pose data is known to drift, particularly owing to the necessary integration steps, thus without a regular zeroing the IMU pose data becomes false. To summarize the IMU data, as a standalone pose data, is not usable for metrology applications.

To overcome some of the deficiencies EP 4 145 084 B1 disclosed a system, wherein the orientation and position of the measurement aid is derived using a combination laser tracking, image based and IMU data. By merging all three types of data with different sampling rates the demand for synchronization and the computational complexity increases. Moreover, by merging laser tracking and IMU data, i.e. the highest quality with the lowest quality data, the quality of the resulting pose data might degrade.

Simpler yet more precise determination of the six degrees-of-freedom of the tool is thus desirable.

### OBJECT OF THE INVENTION

In view of the above circumstances, one object of the present invention is to provide a more efficient determination of the pose of the tool, particularly for coordinate measurement and/or machine control purposes.

These objectives are at least partly achieved by realizing the characterizing features of the independent claims. Features, which further develop the invention in an alternative or advantageous manner are described in the dependent claims.

### SUMMARY OF THE INVENTION

The invention relates to a pose determination system, more particularly a metrology grade tool pose determination system. Or in other words the inventive system is configured to provide positional data with submillimeter precision. By way of example, the inventive system might be used in combination with high-precision measuring tasks in which workpieces are measured with an accuracy of down to a few µm. Alternatively, the system according to the invention can be used in high-precision manufacturing, where an end effector and/or a machining tool must be positioned with similarly stringent requirements. The requirements for orientation or angular precision are corresponding. I.e., any further features of the system, even if not explicitly mentioned, should be interpreted with due regard to this context.

The inventive system comprises a tool, a laser tracker, a data processor and an IMU. From the context of the invention, it is clear to the skilled person that the above-mentioned components can be realized as physically separate, independent elements. However, it is entirely possible to integrate some of the components into unitary devices. Particularly the data processor might be integrated with the laser tracker or with the tool. Similarly, the IMU might be attached to the tool, or might be an integral component of the tool.

Tool in the sense of the invention represents an extended object, whose six degrees-of-pose is to be determined with metrology grade precision. In the sense of the invention such tools might be measurement aids attached to measurement probes, manipulation equipment or manufacturing equipment. Alternatively, the tool might also represent the whole measurement probe, manipulation or manufacturing equipment, particularly an end-effector of said devices. From here on, unless otherwise provided only the embodiments wherein the tool represents the whole the whole measurement probe, manipulation or manufacturing equipment will be discussed in detail. The specific features of attachable measurement aids could be applied correspondingly. Moreover, from here on only the cases where the tool is a measurement probe will be discussed in more detail. The specific features of manipulation or manufacturing equipment can be applied correspondingly.

By way of example, the tool may be embodied as a laser scanner. The laser scanner is configured for contactless sampling of points of surface which are to be surveyed, by means of measurement radiation. The laser scanner may, for example, measure distances based on the principle of triangulation. The tool may also be embodied as a white light scanner or a non-scanning probe for contactless measurements. The tool may also be embodied as a tactilely sampling probe, in which case at least a part of the probe is brought in contact with a point to be surveyed. By bringing them in contact, coordinates of a point to be surveyed can be determined.

The tool might be handheld device configured to be guided by the operator. Particularly the tool might be a distinct, portable device. More particularly the tool might be a portable laser scanner. Alternatively, the tool might be attached to or integrated with a motorized frame, particularly a robotic arm.

The tool comprises a laser-trackable target. The target may be a retroreflector. The target, in particular the retroreflector, is designed to reflect incident acquisition radiation in the direction of the beam source. The acquisition of the radiation reflected by the reflector makes the position of the tool determinable, for example by a laser tracker.

Particularly the target may be illuminated with laser radiation of the laser tracker, which is then reflected by the reflector in the direction of the laser tracker. Based on the detection of the reflected laser radiation, the laser tracker can determine the precise angle at which the reflector is illuminated. Based on laser radiation reflected by the reflector, a distance to the reflector may likewise be determinable for a laser tracker. Based on the angle information relating to the direction of the emitted laser radiation and the distance determined to the reflector, the position of the reflector and therefore of the tool is determinable for the laser tracker. The target in the context of the invention is configured such that its position is derivable with submillimeter, particularly with ±10 µm precision. Unless otherwise specified or if a distinction is sensible, real physical parameters/objects and data regarding these real parameters or objects are used as equivalent.

The tool also comprises a set of alignment markings distributed such that a tool orientation is unambiguously derivable based on an imaged pattern of the alignment markings. By way of example the set of alignment markings are arranged in a determined position relation with respect to one another and form a pattern on the tool.

The laser tracker is configured to track the target and configured to provide tracking data regarding a target position according to a first sampling sequence. The first sampling sequence has a first sampling rate. The first sampling sequence might be periodic or quasi periodic. By way of example the laser radiation of the laser tracker might be utilized for data transfer purposes, in which case a modulated pulse train might be used. The first sampling rate represents a repetition rate or "carrier frequency". Unless otherwise provided from here only the case of periodic first sampling sequence is disclosed in detail. The specific features of a modulated first sampling sequence can be applied correspondingly. For contemporary laser tracker the first sampling rate can be 1 kHz or more.

The laser tracker comprises an imaging unit configured to acquire images according to a second sampling sequence. The second sampling sequence has a second sampling rate which is less than the first sampling rate. The second sampling rate in most practical cases is much lower than the first sampling rate, particularly it might be 100 Hz or less. The second sampling sequence might be periodic or quasi periodic.

The inertial measurement unit is configured to provide IMU orientation data regarding the tool orientation. Advantageously the present invention does not require dead-reckoning capabilities from the IMU. I.e., the aspects of the invention can be realized by cheaper, lower grade IMU-s. Moreover, the orientation stability of IMU-s is typical better than the acceleration stability.

The data processor is configured (i) to derive image-based orientation data regarding the tool orientation based on the imaged pattern of the alignment markings, and (ii) to reference the IMU orientation data with the image-based orientation data. Particularly the data processor is configured to provide zero point calibration for the IMU based on the imaging data. Moreover, by sensor fusing, the data processor might provide IMU based absolute orientation data.

The data processor is configured to provide output data. The output data comprise a sequence of tool positions timestamped according to a third sampling sequence having a third sampling rate. The third sampling rate is more than the second sampling rate. The tool positions are based on the tracking data. The output data also comprise a sequence of tool orientations timestamped according to the third sampling sequence. The tool orientations are based on the IMU orientation data and the image-based orientation data. In other words, the provision of tool position and tool orientation related data is separated from each other, but they are synchronized.

The laser tracker is the most precise source of data; however, it can only provide position data with the corresponding quality. Its sampling rate is typically high and, when needed, can be increased with reasonable effort. Therefore, it is beneficial to utilize laser tracker data essentially directly in determining the position of the tool.

Increasing the sampling rate, while maintaining the spatial resolution of the camera is a challenging task. Particularly it requires faster detectors, which are not only more expensive but consume more energy which might necessitate larger, heavier batteries etc. Moreover, to obtain the pattern of alignment marking in a sufficient quality in a shorter timeframe actively radiating markers might be necessary, which above the previously mentioned problems might lead to an undesirable heating of the tool. The IMU, on its own, cannot provide absolute orientation data and the IMU data is affected by the respective drifts. Said IMU data however can be used to "upsample" the camera-based orientation data in a manner that is more accurate than inter- or extrapolation.

For reasons of clarity only the embodiments in which the data is derived real-time or quasi real-time are discussed in detail. This, however, does not mean that the upsampling in the inventive system and method would not be realized in a time-delayed manner or in a separate data-treatment step. Deriving the six degrees-of-freedom pose of the tool in real time might be a necessity for machine control, however it could be dispensed with in the case of a coordinate measurement, e.g. as a part of a quality control step. The specific features of embodiments with time delayed provision of the output data in the sense of invention can be applied correspondingly.

In some embodiments, the third sampling rate is an integer multiple of the second sampling rate. It is beneficial to provide an upsampling for the orientation data, which is an integer multiplier of the original since this allows a more direct usage of the raw images. Alternatively or additionally, the third sampling rate is equal to the first sampling rate. In other words, the six degrees of freedom tool pose data is provided with the maximum available sampling rate, which is determined by the position sampling rate of the laser tracker.

In some specific embodiments, the third sampling rate is at least ten times the second sampling rate.

In some embodiments, the second sampling sequence is synchronized with the first sampling sequence. In other words, the acquisition of the images are performed such that they are timestamped together with a corresponding laser tracker measurement. The sequence of tool orientations comprises a first subsequence and a second subsequence intermittent to the first sub-sequence. The tool orientations of the first subsequence are associated with the second sampling sequence. The tool orientations of the second subsequence are derived based on the IMU orientation data and at least one tool orientation of the first subsequence. Or in other words the upsampling is performed such that IMU is zeroed based on the image-based orientation data, more particularly an absolute orientation of the IMU is derived based on said dataset, and the IMU data is provided in the intermitting time points. The skilled person understands that the claimed system and method can perform any reasonable data treatment, particularly smoothing or averaging of the laser tracker data, the image data, the image-based orientation data, the IMU orientation data or any further derived data.

In some specific embodiments, the inertial measurement unit comprises a filter, in particular a Kalman-filter. The filter is configured to perform a zero point calibration based on the image based orientation data. Particular an update interval of the zero-point calibration is matched with the second sampling sequence.

By way of example, many features of the inventive system and method will be shown in combination with embodiments wherein the sequence of tool orientations comprises the above-mentioned first and second subsequences and the third sampling rate is the first sampling sequence. The specific features of other embodiments might be applied correspondingly.

In some embodiments, the tool is configured to be coupled with a measurement instrument, particularly a coordinate measuring instrument. More particularly the coordinate measuring instrument is handheld, e.g. embodied as a handheld laser scanner. The data processor is configured to transfer the output data to the measurement instrument for providing measurement data by the measurement instrument. In other words, the measurement data of the measurement instrument is provided with respect to the derived six degrees of freedom pose data of the tool.

In some embodiments, the tool is configured to be coupled with a motorized frame, particularly with a robotic arm. The data processor is configured to transfer the output data to the motorized frame for providing control commands for the motorized frame. It is clear for the skilled person that it is possible to combine this aspect with providing six degree of freedom pose data for measurement purposes.

In some specific embodiments, the IMU is disposed at a finite distance from the tool, in particular integrated with the motorized frame. Or in other words, the inventive system might be realized such that the (raw) IMU data might be provided by an external unit.

In some embodiments, the set of alignment markings are configured to emit and/or to reflect light radiation. Specifically the set of alignment markings is embodied as a set of laser diodes or a set of LED light sources configured to emit radiation in a pulsed manner. The emitted pulses are synchronized with the second sampling sequence. In some specific embodiments the laser tracker is configured to provide synchronization commands to the inertial measurement unit and the set of alignment markings, particularly via a tracking radiation.

In some embodiments, the tool comprises a further target. The further target is laser trackable, in particular formed identically to the target. The further target is disposed on a different face of the tool with a pre-set geometric relation to the target. Or in other words, the further target is configured to provide an alternative tracking target if the (main) target is not in a line of sight or in a disadvantageous orientation.

In such embodiments the tool pose determination system is configured (i) to provide further tracking data regarding a further target position according to the first sampling sequence, (ii) to provide a sequence of further tool positions timestamped according to the third sampling sequence, wherein the further tool positions are based on the further tracking data, and (iii) to switch between providing the tracking data and the further tracking data based on the tool orientation. Or in alternate wording, to use the further target in an equivalent manner as the target. The tool might comprise a plurality of further targets. The tool position data based on the target and the tool position data based on the further target might be discontinuous, i.e. a corresponding conversion or transformation might be required.

The present invention also relates to a method for determining a pose of a tool. The tool is associated with a laser-trackable target, a set of alignment markings and an inertial measurement unit. The method comprises (a) acquiring, by a laser tracker, tracking data regarding a target position according to a first sampling sequence having a first sampling rate, (b) acquiring, by an imaging unit, images comprising imaged patterns of the alignment markings according to a second sampling sequence having a second sampling rate which is less than the first sampling rate, (c) acquiring, by the inertial measurement unit, IMU orientation data regarding the tool orientation, (d) deriving image-based orientation data regarding the tool orientation based on the imaged patterns of the alignment markings, (e) referencing the IMU orientation data with the image-based orientation data, (f) providing a sequence of tool positions timestamped according to a third sampling sequence having a third sampling rate which is more than the second sampling rate, wherein the tool positions are based on the tracking data, and (g) providing a sequence of tool orientations timestamped according to the third sampling sequence, wherein the tool orientations are based on the IMU orientation data and the image-based orientation data. These or any other numbers and letters do not represent a temporal and spatial connection, not even in the form of a preferred sequence, and merely serve the purpose of readability. Particularly the acquisition of the tracking data, image-based orientation data and the IMU orientation data might be performed in a parallel manner.

In some embodiments of the method, the third sampling rate is an integer multiple of the second sampling rate and/or equal to the first sampling rate. In some specific embodiments of the method, the third sampling rate is at least ten times the second sampling rate.

The present invention also relates to a computer program product. The computer program is stored on a machine-readable medium, or is embodied by an electromagnetic wave. The computer program comprises a program code segment. The computer program, or particularly the program code segment and has computer-executable instructions for performing (a) receiving tracking data regarding a target position of a laser-trackable target, wherein the tracking data is timestamped according to a first sampling sequence having a first sampling rate, (b) receiving images comprising imaged patterns of alignment markings, wherein the images are timestamped according to a second sampling sequence having a second sampling rate which is less than the first sampling rate, (c) deriving image-based orientation data regarding the tool orientation based on the imaged patterns of the alignment markings, (d) receiving IMU orientation data regarding the tool orientation, (e) referencing the IMU orientation data with the image-based orientation data, (f) providing a sequence of tool positions timestamped according to a third sampling sequence having a third sampling rate which is more than the second sampling rate, wherein the tool positions are based on the tracking data, and (g) providing a sequence of tool orientations timestamped according to the third sampling sequence, wherein the tool orientations are based on the IMU orientation data and the image-based orientation data.

In some embodiments, the computer program is configured to be executed by an embodiment of the inventive system.

In some embodiments, the computer program has further computer-executable instructions for providing the sequences of tool positions and orientations as output data to (i) a measurement instrument for providing measurement data by the measurement instrument, and/or (ii) to a robotic arm for providing control commands for the robotic arm.

### BRIEF DESCRIPTION OF THE DRAWINGS

By way of example only, specific embodiments of the invention will be described more fully hereinafter with reference to the accompanying figures, wherein:
Figure 1 shows an embodiment of the tool pose determination system with a handheld tool;
Figure 2 shows an embodiment of the tool pose determination system with a tool mounted on a robotic arm;
Figure 3 shows a flowchart regarding the derivation of the tool position and tool orientation;
Figure 4 shows by a schematic block diagram the interaction between the position determination and the orientation determination;
Figure 5 shows schematically the relevant sampling sequences;
Figure 6 depicts an inventive laser tracker attached to an autonomous ground vehicle or an unmanned aerial vehicle.

### SPECIFIC EMBODIMENTS OF THE INVENTION

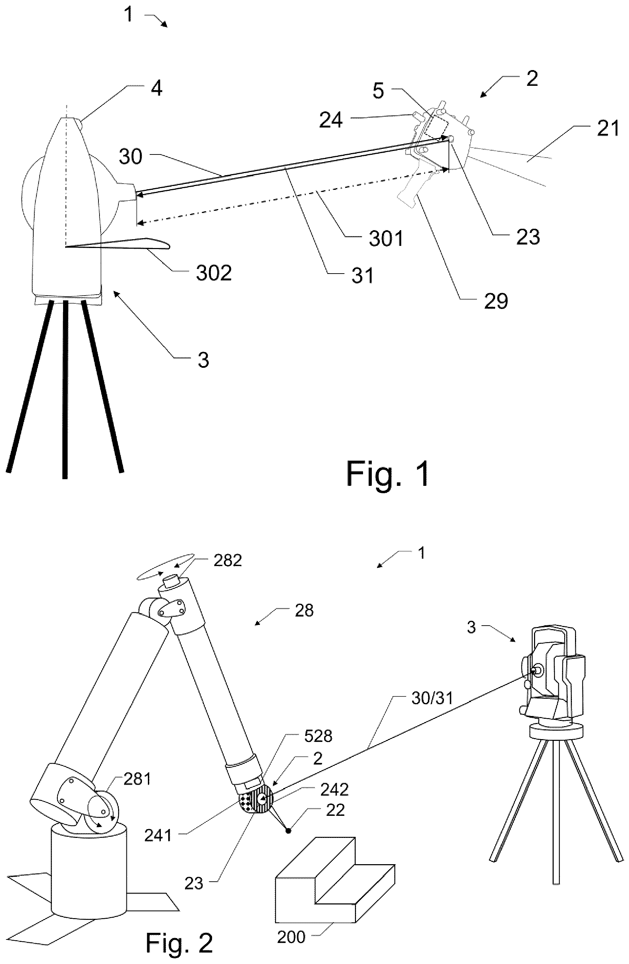

Figure 1 shows a tool pose determination system **1** according to an embodiment of the invention. The system comprises a tool **2,** in this example embodied as a handheld laser scanner. The handheld laser scanner **2** comprises a handle **29** by means of which it can be manually guided. The handheld laser scanner **2** comprises a beam module, which is designed to emit acquisition radiation **21** with a preset or variable direction. The tool **2** comprises plurality of laser-trackable target **23** (only one is emphasized) configured to be tracked by a laser tracker **3.** The tool **2** comprises an IMU **5** integrated in the tool **2.** The IMU **5** provides IMU orientation data regarding the tool orientation. The tool **2** has a set of alignment markings **24,** embodied as a set of LED light sources (only one is emphasized), distributed such that a tool orientation is unambiguously derivable based on an imaged pattern of the alignment markings **24.** Particularly the number and spatial orientation of the LED-s **24** in each of the faces of the tool **2** is unique.

The laser tracker **3** is configured to track the target **23** and to provide tracking data regarding a target position according to a first sampling sequence having a first sampling rate. The target **23** is illuminated with laser radiation **30** of the laser tracker **3,** which is then reflected **31** by the target **23** in the direction of the laser tracker **3.** Based on laser radiation reflected **31** by the target **23,** a distance **301** to the target **23** can be determined. Based on angle information **302** (only the azimuth angle is shown) relating to the direction of the emitted laser radiation **30** and the distance **301,** the position of the target **23** and therefore of the tool **2** is determinable for the laser tracker **3.** While not shown the laser tracker **3** and the target **23** comprise prior art means to determine a center point of the target and its movement. The laser tracker is configured to track the target by adjusting the two angles **302** of emission.

The laser tracker **3** comprises an imaging unit **4** configured to acquire images according to a second sampling sequence having a second sampling rate which is less than the first sampling rate.

Figure 2 shows another embodiment of the inventive system. In this embodiment the tool **2** comprises a manufacturing equipment **22** for processing a workpiece **200** and mounted on a robotic arm **28.** The robotic arm **28** comprises a plurality of motorized joints **281,282** for the positioning of the tool **2** and particularly the manufacturing equipment **22.** The robotic arm **28** comprises an integrated IMU **528** located in the proximity of the tool **2.** The IMU **528** provides IMU data representing an orientation of the tool **2.** Such an IMU **528,** due to its communicative coupling to the further components, is considered to be part of the inventive tool positioning system **1.**

The tool **2** comprises at least one of laser-trackable target **23** configured to be tracked by a laser tracker **3.** The laser tracker **3** adjusts the angles of emission for the emitted beam **30** based on the position data obtained by detecting the reflected beam **31** as disclosed with respect to Figure 1.

The tool comprises set of alignment markings, embodied as specific visual markings **241,242** representing the different faces of the tool **2,** while the laser tracker **3** comprises an imaging unit (not shown) configured to acquire images comprising the alignment markings **241,242.**

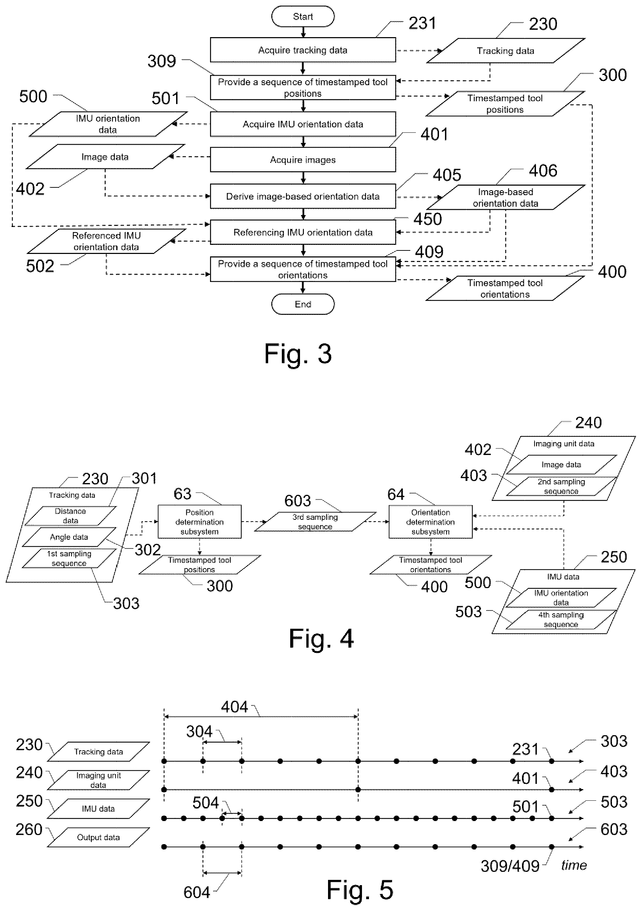

Figure 3 depicts a flowchart representation of an embodiment of the inventive method for determining a pose of a tool. Command/flow-lines show as bold and data-lines as dashed arrows. The depicted flowcharts focus on the features of the claimed invention and the actual embodiments comprise further, non-depicted elements, in particular command or data elements and/or data transfer lines. Moreover, command or data modules might be depicted in a simplified form due to reasons of clarity and conciseness.

In the depicted embodiment tracking data **230** regarding a target position according is acquired **231.** Based on the tracking data **230** a sequence of timestamped tool positions **300** is provided **309.** While not shown in this simplified flowchart for transparency reasons it will be assumed that the tool positions **300** are timestamped correspondingly to the tracking data **230.** A given tool position data **300** might be based on a plurality of corresponding timestamped tracking data segments. Owing to the precision and the fast data acquisition of the laser tracker, the tool position data **300** can be provided with few tens of µm micrometer precision or better and with kHz sampling rate. While providing the tool position data with the sampling rate of the laser tracker is beneficial in some embodiments of the method the tool positions **300** are up- or downsampled as compared to the tracking data **230.**

In the next step IMU orientation data **500** is acquired **501,** which is followed by the acquisition **401** of image data **402.** From the image data **402** image-based orientation data **406** is derived **405,** based on the imaged patterns of the alignment markings.

For the sake of transparency, the acquisition of the data is depicted in a serial manner. The three acquisition steps **231,501,401** are, however, independent of each other. Thus, they can be performed independently of each other in any order or in a parallelized manner. Moreover, the skilled person understands that the inventive method is preferably performed in a continuous manner.

The IMU orientation data **500** is then referenced **450** with the image-based orientation data **406.** Particularly the referenced IMU data **502** corresponds to the image-based orientation data **406** for the same point of time. Moreover, the referenced IMU orientation data **502** is zeroed with the aid of the image-based orientation data **406.**

The of a sequence of timestamped tool orientations **400** is provided **409** based on the referenced IMU data **502** and the image-based orientation data **406** such that it is matched with the sequence of timestamped tool positions **300.** In other words, a sequence of timestamped six degrees-of-freedom pose data is provided by merging the two separate datasets. Such output data might be used for providing measurement data by the measurement instrument whose pose is such tracked or for providing control commands for the motorized frame.

Figure 4 shows the relevant interactions between the raw data sources, i.e. the laser tracker, the imaging unit and the IMU, a position determination subsystem **63** providing timestamped tool positions **300,** and an orientation determination subsystem **64** providing timestamped tool orientations **400.** The position **63** and orientation determination subsystems **64** represent functional definitions and might comprise hardware, particularly input/output interfaces and software components. Preferably the software components are realized as specific sub-components of a computer program.

The position determination subsystem **63** is communicatively coupled with the laser tracker and receives tracking data **230** according to a first sampling sequence **303** having a first sampling rate. The tracking data in this example is embodied as distance data **301** and angle data **302,** however alternatives such as derived Cartesian coordinates might also be provided as tracking data **230.** The position determination subsystem **63** provides tool positions **300** timestamped according to a third sampling sequence **603** having a third sampling rate. In some embodiments the third sampling sequence **603** is essentially the first sampling sequence **303.** The position determination **63** subsystem might perform data post treatment, e.g. smoothing, or filtering, particularly by identifying and removing outliers.

The orientation determination subsystem **64** working substantially independently from the position determination subsystem **63.** Input data is received from the imaging unit as imaging unit data **240** and from the IMU as IMU data **250.** The imaging unit data **240** comprises images **402** timestamped according to a second sampling sequence **403** having a second sampling rate which is less than the first sampling rate. The IMU data **250** comprises IMU orientation data **500** timestamped according to a fourth sampling sequence **503.** The fourth sampling sequence is assumed to have a sufficiently high sampling rate. Particularly the IMU orientation data **500** is provided with such a time resolution that tool orientation **400** timestamped according to the third sampling sequence **603** can be reasonably provided. Timestamped tool orientation **400** might be provided in the manner disclosed in Figure 3.

The third sampling sequence **603** is provided to the orientation determination subsystem **64** such that the two subsystems **63,64** provide independent, but synchronized data.

Figure 5 shows the timescales involved with respect to the data acquisition **231,401,501** and outputting events **309/409.** Each dot represents the respective acquisition **231,401,501** of the tracking **230,** imaging unit **240,** and IMU data **250** or the provision **309/409** of output data **260,** i.e. the tool pose. For the sake of transparency no data pre-treatment, e.g. averaging, filtering, integration etc., is shown in detail on this representation. The skilled person can adapt the present invention to include state of the art data treatment for the respective input and output data as well as reasonable further developments of it. For transparency reasons the data processing, e.g. as shown in Figure 3 and/or 4, is assumed to be instantaneous.

The laser tracker acquires **231** tracking data **230** according to a first sampling sequence **303** with a first sampling rate. The first sampling rate is represented by a respective first sampling interval **304** which is inversely proportional to the first sampling rate.

The imaging unit data **240** is acquired according to a second sampling sequence **403** having a second sampling rate, represented by a respective second sampling interval **404.** The second sampling rate is less than the first sampling rate, in this particular example the first sampling rate is six-fold of the second sampling rate. It is advantageous to provide output data **260** comprising both tool orientation and position data. Thus, the tracking data **230** must be downsampled and/or the imaging unit data **240** have to be upsampled. In the prior art said upsampling might be provided by inter- and/or extrapolation of the imaging unit data **240.**

The second sampling rate of the imaging unit is typically adjustable, and it is advantageous to adjust the second sampling rate such that it is a unit fraction of the first sampling rate as shown in Figure 5. However, as each acquired data is clearly distinguishable by its time stamp no such adjustment is necessary and the respective first, second and third sampling sequences can relate to arbitrary times.

The IMU data **250** is acquired **501** according to a fourth sampling sequence **503** having a fourth sampling rate, represented by a respective fourth sampling interval **504.** which is assumed to be high. Particularly the present invention does not require a dead-reckoning based on the IMU data **250,** thus it is sufficient to process the orientation data only. The fourth sampling rate of the IMU data is typically adjustable thus it is advantageous if it is matched with the acquisition **401** of the imaging unit data **240,** i.e. when the fourth sampling rate is an integer multiplier of the second sampling rate, preferably the fourth sampling rate is also equal to the first sampling rate or an integer multiplier of it. The tool orientation, as part of the output data **260,** is provided by fusing the imaging unit data **240** and the IMU data **250.** It is clear for the skilled person that having access to whole six degrees-of-freedom IMU data **250** is beneficial in certain cases, e.g. when the tracking data **230** is lost. Such dead-reckoning can be provided by appropriate further functionalities of the laser tracker.

The output data **260** is provided **309/409** according to a third sampling sequence **603** having a third sampling rate, represented by a respective third sampling interval **604.** The third sampling rate is more than the second sampling rate, i.e. the (image based) tool orientation is upsampled using the IMU data **250.** Typically, it is beneficial to provide **309/409** the output data **260** according to the highest achievable measurement time resolution. I.e., when the third sampling rate is equal to the first sampling rate. Nevertheless, the present invention is not limited to such case and equally cover embodiments, wherein the third sampling rate differs from the first sampling rate, particularly less than that. Such embodiments are advantageous if the output data **260** is to be synchronized with other data that is cycled with a different timing scale, e.g. when a tracked laser scanner generates scan data with a slower rate. Alternatively, the output data **260** might be upsampled to a third sampling rate even higher than the first sampling rate, by extrapolation and/or interpolation for data compatibility reasons. The skilled person understands that such operations are purely mathematical in nature.

Alternative scenarios wherein the sampling rates, particularly the third sampling rate, are dynamically adjusted are also possible using the inventive system and methods. Such dynamic adjustments might be performed to achieve (i) maximal allowable rate by the receiving hardware or (ii) maximal allowable rate by the communication channel. Particularly the third sampling rate is adjusted for compatibility, particularly with high-value legacy systems. Alternatively or additionally, especially for battery powered system, the sampling rates might be adjusted automatically or manually by the user to optimize power consumption or system performance (e.g. heat dissipation). This could be understood as a kind of balancing act between all the system variables, particularly the sampling rates.

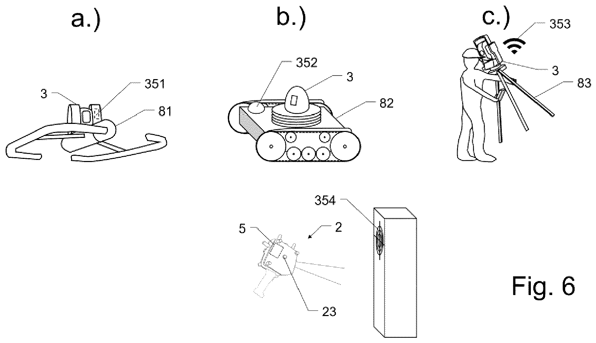

While the precision of the laser tracker **3** can be best employed from a stable, static position nothing prevents a repositioning of the laser tracker **3** have the need arises. Figure 6 illustrates the repositioning of the laser tracker **3** via UAV **81** (Figure 6a), a AGV **82** (Figure 6b), or using a man-portable base **83** (Figure 6c). The position of the laser tracker **3** might be updated in a coarse manner using an internal IMU **351,** a GNSS receiver **352,** or a WLAN-based positioning **353.** The depicted transport methods and position tracking methods are freely combinable. Alternative pose tracking option, such as visual positioning methods might also be used. Additionally, the laser tracker **3** might reestablish its position by measuring its relative position with respect to referencing targets **354** with known position. Alternatively, the laser tracker **3** might use such targets **354** to monitor its own movement.

During the movement of the laser tracker **3** the tool **2** might monitor its own pose using the IMU **5** in a dead-reckoning mode. When the laser tracker **3** established its position with respect to the referencing targets **354** it can determine the position of the tool **2** in its own the coordinate system and connect the tracking target **23** with the laser beam and re-start the tracking. The additional IMU **351** mounted with the tracker **3** is also useful to monitor the status of the tracker **3** (static, moving, unstable/vibrating, etc.)

Although the invention is illustrated above, partly with reference to some specific embodiments, it must be understood that numerous modifications and combinations of different features of the embodiments can be made. All of these modifications lie within the scope of the appended claims.

## Claims

1. Tool pose determination system (1), comprising a tool (2), a laser tracker (3), a data processor, and an inertial measurement unit (5,528), wherein
- the tool (2) comprises
o a laser-trackable target (23), and
∘ a set of alignment markings (24,241,242) distributed such that a tool orientation is unambiguously derivable based on an imaged pattern of the alignment markings (24,241,242),
- the laser tracker (3)
∘ is configured to track the target (23) and to provide tracking data (230) regarding a target position according to a first sampling sequence (303) having a first sampling rate, and
∘ comprises an imaging unit (4) configured to acquire (401) images (402) according to a second sampling sequence (403) having a second sampling rate which is less than the first sampling rate,
- the inertial measurement unit (5,528) is configured to provide IMU orientation data (500) regarding the tool orientation, and
- the data processor is configured
∘ to derive (405) image-based orientation data (406) regarding the tool orientation based on the imaged pattern of the alignment markings (24,241,242), and
∘ to reference (450) the IMU orientation data (500) with the image-based orientation data (406),
**characterized in that**
- the data processor is configured to provide output data (260) comprising
∘ a sequence of tool positions (300) timestamped according to a third sampling sequence (603) having a third sampling rate which is more than the second sampling rate, wherein the tool positions (300) are based on the tracking data (230), and
∘ a sequence of tool orientations (400) timestamped according to the third sampling sequence (603), wherein the tool orientations are based on the IMU orientation data (500) and the image-based orientation data (406).

2. The tool pose determination system (1) according to claim 1, wherein the third sampling rate is an integer multiple of the second sampling rate and/or equal to the first sampling rate, in particular wherein the third sampling rate is at least ten times the second sampling rate.

3. The tool pose determination system (1) according to any one of claims 1 or 2, wherein
- second sampling sequence (403) is synchronized with the first sampling sequence (303), and
- the sequence of tool orientations comprises a first subsequence and a second subsequence intermittent to the first sub-sequence, wherein
∘ the tool orientations of the first subsequence are associated with the second sampling sequence (403), and
∘ the tool orientations of the second subsequence are derived based on the IMU orientation data (500) and at least one tool orientation of the first subsequence.

4. The tool pose determination system (1) according to claim 3, wherein the inertial measurement unit (5,528) comprises a filter, in particular a Kalman-filter, configured to perform a zero-point calibration based on the image based orientation data (406),
in particular wherein an update interval of the zero-point calibration is matched with the second sampling sequence (403).

5. The tool pose determination system (1) according to any one of the preceding claims, wherein
- the tool (2) is configured to be coupled with a measurement instrument, particularly a coordinate measuring instrument, more particularly a handheld coordinate measuring instrument, and
- the data processor is configured to transfer the output data (260) to the measurement instrument for providing measurement data by the measurement instrument.

6. The tool pose determination system (1) according to any one of the preceding claims, wherein
- the tool (2) is configured to be coupled with a motorized frame (28), particularly with a robotic arm, and
- the data processor is configured to transfer the output data (260) to the motorized frame (28) for providing control commands for the motorized frame (28).

7. The tool pose determination system (1) according to claim 6, wherein the inertial measuring unit (528) is disposed at a finite distance from the tool (2), in particular integrated with the motorized frame (28).

8. The tool pose determination system (1) according to any one of the preceding claims, wherein the set of alignment markings (24,241,242) are configured to emit and/or to reflect light radiation.

9. The tool pose determination system (1) according to claim 8, wherein the set of alignment markings (24,241,242) is embodied as a set of laser diodes or a set of LED light sources configured to emit radiation in a pulsed manner such that the emitted pulses are synchronized with the second sampling sequence (403).

10. The tool pose determination system (1) according to claims 9, wherein the laser tracker (3) is configured to provide synchronization commands to the inertial measurement unit (5,528) and the set of alignment markings (24,241,242), particularly via a tracking radiation (30,31).

11. The tool pose determination system (1) according to any one of the preceding claims, wherein the tool (2) comprises a further target, wherein the further target
- is laser trackable, in particular formed identically to the target (23), and
- is disposed on a different face of the tool (2) with a pre-set geometric relation to the target,
and wherein the tool pose determination system (1) is configured
- to provide further tracking data regarding a further target position according to the first sampling sequence (303),
- to provide a sequence of further tool positions timestamped according to the third sampling sequence (603), wherein the further tool positions are based on the further tracking data, and
- to switch between providing the tracking data (230) and the further tracking data based on the tool orientation.

12. A method for determining a pose of a tool, the tool (2) being associated with a laser-trackable target (23), a set of alignment markings (24,241,242) and an inertial measurement unit (5,528), wherein the method comprises
- acquiring (231), by a laser tracker (3), tracking data (230) regarding a target position according to a first sampling sequence (303) having a first sampling rate,
- acquiring (401), by an imaging unit (4), images (402) comprising imaged patterns of the alignment markings (24,241,242) according to a second sampling sequence having (403) a second sampling rate which is less than the first sampling rate,
- acquiring (501), by the inertial measurement unit (5,528), IMU orientation data (500) regarding the tool orientation,
- deriving (405) image-based orientation data (406) regarding the tool orientation based on the imaged patterns of the alignment markings (24,241,242), and
- referencing (450) the IMU orientation data (500) with the image-based orientation data (406),
**characterized in that**
the method further comprises
- providing (309) a sequence of tool positions (300) timestamped according to a third sampling sequence (603) having a third sampling rate which is more than the second sampling rate, wherein the tool positions (300) are based on the tracking data (230), and
- providing (409) a sequence of tool orientations (400) timestamped according to the third sampling sequence (603), wherein the tool orientations are based on the IMU orientation data (500) and the image-based orientation data (406).

13. The method according to claim 12 wherein the third sampling rate is an integer multiple of the second sampling rate and/or equal to the first sampling rate, in particular wherein the third sampling rate is at least ten times the second sampling rate.

14. A computer program which is stored on a machine-readable medium, or is embodied by an electromagnetic wave, comprises a program code segment, and has computer-executable instructions for performing
- receiving (231) tracking data (230) regarding a target position of a laser-trackable target (23), wherein the tracking data (230) is timestamped according to a first sampling sequence (303) having a first sampling rate,
- receiving (401) images (402) comprising imaged patterns of alignment markings (24,241,242), wherein the images (402) are timestamped according to a second sampling sequence (403) having a second sampling rate which is less than the first sampling rate,
- deriving (405) image-based orientation data (406) regarding the tool orientation based on the imaged patterns of the alignment markings (24,241,242),
- receiving (501) IMU orientation data (500) regarding the tool orientation,
- referencing (450) the IMU orientation data (500) with the image-based orientation data (406),
- providing (309) a sequence of tool positions (300) timestamped according to a third sampling sequence (603) having a third sampling rate which is more than the second sampling rate, wherein the tool positions (300) are based on the tracking data (230), and
- providing (409) a sequence of tool orientations (400) timestamped according to the third sampling sequence (603), wherein the tool orientations are based on the IMU orientation data (500) and the image-based orientation data (406), in particular wherein the computer program is configured to be executed by a system according to any one of claims 1 to 12.

15. The computer program according to claim 14 having further computer-executable instructions for providing the sequences of tool positions (300) and orientations (400) as output data (260)
- to a measurement instrument for providing measurement data by the measurement instrument, and/or
- to a robotic arm for providing control commands for the robotic arm.
